# EUROPÄISCHE PATENTSCHRIFT

(11) **EP 2 948 857 B1**
(45) Veröffentlichungstag und Bekanntmachung des Hinweises auf die Patenterteilung: **01.03.2017**
(21) Anmeldenummer: 14701189.4
(22) Anmeldetag: 23.01.2014
(51) Int. Cl.: G06F 13/40, H04L 12/40

(54) **BUSKNOTEN UND BUSSYSTEM SOWIE VERFAHREN ZUR IDENTIFIKATION DER BUSKNOTEN DES BUSSYSTEMS**
BUS NODE AND BUS SYSTEM AND METHOD FOR IDENTIFYING THE BUS NODES OF THE BUS SYSTEM
NOEUD DE BUS ET SYSTÈME DE BUS AINSI QUE PROCÉDÉ D'IDENTIFICATION DES NOEUD DE BUS DU SYSTÈME DE BUS

(30) Priorität: 24.01.2013 DE 102013201106
(43) Veröffentlichungstag der Anmeldung: 02.12.2015
(73) Patentinhaber: Smiths Heimann GmbH, 65205 Wiesbaden (DE)
(72) Erfinder: RIEDEL, Ulrich, 55252 Mainz-Kastel (DE)
(74) Vertreter: Klunker . Schmitt-Nilson . Hirsch
(86) Internationale Anmeldenummer: PCT/EP2014/051323
(87) Internationale Veröffentlichungsnummer: WO 2014/114713

(56) Entgegenhaltungen:
- EP-A1- 1 455 278
- EP-A2- 2 521 041
- DE-A1-102008 044 777
- DE-A1-102009 045 126
- DE-A1-102010 026 431
- DE-B3-102007 028 926

## Beschreibung

### Gebiet der Erfindung

Die Erfindung betrifft im Allgemeinen den Datenaustausch zwischen verschiedenen Komponenten einer technischen Anlage. Die Erfindung betrifft im Besonderen die Vernetzung sowie Konfiguration verschiedener Komponenten einer technischen Anlage, um einen Datenaustausch zwischen den Komponenten zu ermöglichen.

### Hintergrund der Erfindung

Technische Anlagen, Maschinen oder Geräte bestehen immer mehr aus einer Vielzahl elektronischer Komponenten, wie Steuergeräten, Sensoren und Aktoren. Für eine bestimmungsgemäße Funktion des Geräts ist häufig nicht nur eine Kommunikation einzelner Komponenten mit einer zentralen Steuereinheit sondern auch eine Kommunikation der Komponenten untereinander notwendig. Grundsätzlich können die Komponenten hierzu mittels proprietärer Kommunikationsleitungen verbunden, mithin untereinander vernetzt werden. Dies erfordert wenigstens eine Leitung von der zentralen Steuereinheit zu jedem Sensor und Aktor (parallele Verdrahtung). Mit steigendem Automatisierungsgrad einer Anlage, einer Maschine oder eines Geräts wächst der Verkabelungsaufwand bei paralleler Verdrahtung aufgrund der größeren Anzahl der Ein-/Ausgabepunkte. Das verursacht großen Aufwand hinsichtlich Projektierung, Installation, Inbetriebnahme und Wartung.

Es ist bekannt, die zu vernetzenden Komponenten seriell mittels eines sogenannten Kommunikationsbusses zu verbinden. Dazu muss nur eine Verbindung gezogen werden, die bei jeder Komponente vorbeigeführt wird (serielle Verdrahtung). Der Kommunikationsbus ersetzt so die parallelen Leitungsbündel durch ein einziges Buskabel, welches die einzelnen Komponenten als Busteilnehmer (Busknoten) verbindet.

Für eine derartige serielle Vernetzung der Komponenten sind zahlreiche Netzwerk- und Bustechnologien bekannt. Ein bekanntes Beispiel, welches ursprünglich für den Kraftfahrzeugbereich entwickelt wurde, ist der Controller Area Network (CAN) Bus. Physikalische Gegebenheiten für den CAN-Bus sowie andere Busprotokolle, wie z.B. den Profibus, sind in der ISO 11898 international standardisiert, welche die Layer 1 (physikalische Schicht) und 2 (Datensicherungsschicht) im ISO/OSI-Referenzmodell definiert. Eine Weiterentwicklung ist CANopen, das ein auf CAN basierendes Schicht-7-Kommunikationsprotokoll ist. CANopen wird seit 1995 von der CAN in Automation gepflegt und ist inzwischen als Europäische Norm EN 50325-4 standardisiert.

Damit eine Kommunikation respektive ein Datenaustausch auf dem Bus funktionieren kann, muss der einzelne Busteilnehmer eindeutig identifizierbar und somit adressierbar sein. Ein weiteres Erfordernis serieller Bussysteme besteht darin, dass der Bus auf physikalischer Ebene jeweils an seinen Enden mittels Abschlusswiderständen abgeschlossen (Busterminierung) werden muss. Dies alles erfordert eine sorgfältige Planung und aufwändige Implementierung.

Derzeit bekannte CAN-Bus-Systeme erfordern eine aufwändige Konfiguration per Schalter (z.B. DIP-Schalter) oder Drahtbrücken (sog. Jumper), mittels derer jeder am Bus angeschlossenen Komponente eine eindeutige Adresse bzw. ID zugeordnet wird und bei der eines der Busenden bildenden Komponente die erforderliche Busterminierung aktiviert wird.

Die Bus-Konfiguration ist beim Zusammenbau des Systems festzulegen und kann nur mit hohem Aufwand geändert bzw. angepasst werden, beispielsweise wenn eine weitere Komponente hinzugefügt werden soll.

DE102008044777 A1 offenbart ein Verfahren zum Adressieren der Teilnehmer eines Bussystems mit einer Steuereinheit, einem von der Steuereinheit ausgehenden Bus und mit mehreren adressierbaren Teilnehmern, die an dem Bus angeschlossen sind, wobei die Steuereinheit einen Identifizierstrom zu den Teilnehmern hin einspeist, der Identifizierstrom jeweils über einen elektrischen Widerstand geführt wird, der einem noch nicht adressierten Teilnehmer zugeordnet ist, jeder Teilnehmer die am zugeordneten Widerstand anliegende Spannung bestimmt, wobei den Teilnehmern zwecks Adressierung eine Adresse zugeordnet wird, deren Spannungswert sich von den Spannungswerten der anderen Teilnehmer um einen vorgebbaren Schwellwert unterscheidet, und dass die adressierten Teilnehmer den zugeordneten Widerstand kurzschließen.

DE10 2009 045 126 A1 offenbart in einen Kommunikationsverbund integrierte Einheiten mit jeweils genau einer Lage erkennende Einheit, die anhand von empfangenen und gesendeten Lage erkennenden Signalen über eine Randlage oder eine Innenlage der zugehörigen Einheit entscheidet und bei Randlage eine Terminierung ausführt.

Weitere Verfahren zum Identifizieren von Busknoten sind bekannt von EP2521041 und DE102007028926.

### Zusammenfassung der Erfindung

Es ist eine Aufgabe der Erfindung, eine flexible, in der Herstellung möglichst einfache und kostengünstige Möglichkeit zu schaffen, um einen Datenaustausch zwischen verschiedenen Komponenten eines Geräts zu ermöglichen.

Die Aufgabe wird mit den Merkmalen der unabhängigen Ansprüche gelöst. Vorteilhafte Ausführungsbeispiele und Weiterbildungen sind in den jeweils sich anschließenden Unteransprüchen angegeben.

Ein Kerngedanke der Erfindung besteht darin, die Busknoten-ID bzw. Busknoten-Adresse und ggf. die Busterminierung eines Busknotens basierend auf der Verkabelung des Busses bzw. der Position des jeweiligen Busknotens im Bus über den Bus in einer Bus-Initialisierungsphase einzustellen zu können. D.h., jedem Busknoten wird bei der Initialisierung des Buses über den Bus eine Kennung (ID bzw. Adresse) zugeteilt und falls der Busknoten der letzte in der Busknotenkette ist, wird dessen Terminator- bzw. Abschlusswiderstand aktiviert. Dadurch kann die aufwändige Konfiguration der Busknoten-ID und ggf. des Terminator-Widerstands der einzelnen Busknoten des Bussystems mittels Jumper und/oder DIP-Schalter vermieden werden.

Ein erster Aspekt betrifft einen Busknoten mit einer Kommunikationseinheit, die zur Kommunikation mit wenigstens einer Datenleitung eines Kommunikationsbusses koppelbar ist, einer Busknotensteuerung, die betriebsmäßig mit der Kommunikationseinheit gekoppelt ist, und einer betriebsmäßig mit der Busknotensteuerung gekoppelten Identifikationseinheit, welche konfiguriert ist, der jeweiligen Busknotensteuerung einen Zeitpunkt für einen dem Busknoten zugeordneten Nachrichtenaustausch mit einem Busmaster zur Zuteilung einer eindeutigen Kennung (ID bzw. Adresse) an den Busknoten durch den Busmaster zu signalisieren.

In der Identifikationseinheit ist wahlweise anstelle einer direkten Verbindung zwischen einem IDT-Eingang und einem IDT-Ausgang für eine Identifikationsleitung (IDT) ein Zweitor zwischenschaltbar. D.h., die Identifikationseinheit kann die Identifikationsleitung des Busknotens durchschleifen. Das Zweitor ist derart konfiguriert, dass bei einer seriellen Verschaltung von einem ersten Busknoten mit wenigstens einem zweiten Busknoten für die Busknotensteuerung der Zeitpunkt für den dem Busknoten zugeordneten Nachrichtenaustausch mit dem Busmaster zur Zuteilung einer eindeutigen Kennung anhand eines Vergleichs der Spannung an dem IDT-Eingang mit einem vorbestimmten Schwellwert unabhängig von der Anzahl der zweiten Busknoten identifizierbar ist.

In einer vorteilhaften Weiterbildung weist der Busknoten weiter eine durch die Busknotensteuerung schaltbare bzw. aktivierbare Busterminierungseinheit für jede Datenleitung auf. Im einfachsten Fall besteht die Busterminierungseinheit aus einem ohmschen Widerstand bzw. einem RC-Glied, mit dem die jeweilige Datenleitung entsprechend ihrem Wellenwiderstand reflexionsfrei abgeschlossen werden kann. Es ist auch möglich, dass die Busterminierungseinheit eine aktive Schaltung, beispielsweise eine geregelte Spannungsquelle ist, mittels der ein Ruhepegel auf der jeweiligen Datenleitung gehalten wird.

Erfindungsgemäß ist das Zweitor ein symmetrisches Zweitor in Form einer T-Schaltung aus drei T-förmig verschalteten Widerständen. Durch den symmetrischen Aufbau muss keine bestimmte Einbaurichtung im Bussystem beachtet werden, was den Installationsaufwand bei Anlagen, Maschine oder Geräten weiter einfach hält. Ein erster Widerstand und ein zweiter Widerstand sind seriell mit der Identifikationsleitung (IDT) verschaltbar ausgeführt, wobei ein dritter Widerstand zwischen die vom Verbindungspunkt zwischen dem ersten und dem zweiten Widerstand gebildete Mitte der T-Schaltung und das Bezugspotential (GND) verschaltbar ist.

Neben den bekannten Funktionalitäten eines Busknotens kann dieser für die hier vorgeschlagene Lösung zusätzlich so eingerichtet sein, dass der Busknotensteuerung ein erstes Signal entsprechend einer ersten Spannung am IDT-Eingang zur Verfügung gestellt wird. Dadurch kann die Busknotensteuerung weiter eingerichtet sein, im Initialisierungszustand sobald das erste Signal anzeigt, dass die erste Spannung größer als der vorbestimmte Schwellwert ist, mittels der Kommunikationseinheit des Busknotens über die wenigstens eine Datenleitung eine erste Nachricht an einen Busmaster zu senden. Mit anderen Worten ist es möglich, dass die Busknotensteuerung allein anhand des ersten Signals den Zeitpunkt erkennt, zu dem genau dieser Busknoten einen Nachrichtenaustausch mit dem Busmaster beginnen soll, um die eindeutige Kennung für zukünftige Kommunikation auf dem Kommunikationsbus zu erhalten. Hierzu ist die Busknotensteuerung weiter eingerichtet, danach eine zweite Nachricht vom Busmaster über die wenigstens eine Datenleitung zu empfangen, in welcher die eindeutige Kennung für den Busknoten enthalten ist. Folglich kann der Busknoten anschließend unter der Kennung über den Kommunikationsbus kommunizieren, und ist insbesondere mittels dieser Kennung adressierbar, d.h. direkt ansprechbar.

In einer Weiterbildung ist der Busknoten so eingerichtet, dass der Busknotensteuerung ein zweites Signal entsprechend einer zweiten Spannung am IDT-Ausgang und ein drittes Signal entsprechend einer dritten Spannung an der Mitte der T-Schaltung zur Verfügung gestellt wird. Dadurch kann die Busknotensteuerung weiter eingerichtet sein, zu erkennen, dass dieser Busknoten ein Ende des Kommunikationsbusses bildet. Dies kann die Busknotensteuerung daran erkennen, dass das zweite Signal und das dritte Signal anzeigen, dass die zweite Spannung und die dritte Spannung im Wesentlichen gleich sind. Dies bedeutet, dass der IDT-Ausgang des Busknoten unbeschaltet ist, mithin leer läuft. Entsprechend kann die Busknotensteuerung eingerichtet sein, die Busterminierungseinheit für jede Datenleitung zu aktivieren. Somit kann bei der Initialisierung des Kommunikationsbuses automatisch auch sichergestellt werden, dass der Kommunikationsbus an seinem dem Busmaster gegenüberliegenden Ende korrekt abgeschlossen ist.

Basierend auf der Möglichkeit das Busende zu erkennen, kann die Busknotensteuerung weiter eingerichtet sein, in die erste Nachricht an den Busmaster eine diesbezügliche Information einzufügen. Dies kann beispielsweise besonders einfach mit einem Bit, d.h. einem Flag in der ersten Nachricht, das anzeigt, dass der Busknoten an einem Ende des Kommunikationsbusses angeordnet ist, umgesetzt werden.

Ein zweiter Aspekt betrifft ein Kommunikationsbussystem mit einem Kommunikationsbus, der wenigstens eine Datenleitung und eine identifikationsleitung aufweist, und einem, ein Ende des Kommunikationsbusses bildenden Busmaster und mindestens einem weiteren Busknoten gemäß dem ersten Aspekt, der als Slave konfiguriert ist.

Ein dritter Aspekt betrifft ein Verfahren zur, insbesondere sukzessiven, Identifikation der Busknoten des Kommunikationsbussystems mit Busknoten gemäß dem ersten Aspekt. Dabei vergibt ein ein Ende des Kommunikationsbusses bildender Busknoten, der als Master konfiguriert ist, an wenigstens einen weiteren Busknoten, der als Slave konfiguriert ist, jeweils eine eindeutige Kennung mittels der folgenden Schritte:
(a) zuerst versetzt der Busmaster die am Kommunikationsbus angeschlossenen weiteren Busknoten in einen Initialisierungszustand; dies kann beispielsweise besonders einfach durch Verändern des Spannungspegels auf der Identifikationsleitung, z.B. durch Ziehen des Spannungspegels auf ein Bezugspotential wie 0V, d.h. Masse bzw. Ground (GND) erfolgen.
(b) Anschließend, ggf. nach einer vorbestimmten Zeitdauer, um den weiteren Busknoten Zeit für die Einrichtung des Initialisierungszustandes zu geben, koppelt der Busmaster die Identifikationsleitung (IDT) mit einem vorbestimmten Spannungspegel; dies kann beispielsweise durch Verbinden der Identifikationsleitung im Busmaster mit einer Spannungsquelle mit vorbestimmtem Spannungspegel und Innenwiderstand erfolgen. Wenn der Busmaster ein Busknoten gemäß dem ersten Aspekt ist, dann kann die Spannungskopplung der Identifikationsleitung über einen Punkt im zugeschalteten Zweitor erfolgen. Da das Zweitor als ein symmetrisches Widerstandsnetzwerk konfiguriert ist, eignet sich als Einkoppelpunkt für die Spannung ein Mittelpunkt der Schaltung, da dann grundsätzlich der IDT-Eingang und IDT-Ausgang am Master- bzw. einem Slave-Busknoten beliebig verwendet werden können.
(c) Danach wartet der Busmaster auf den Empfang einer ersten Nachricht von einem der weiteren Busknoten auf der wenigstens einen Datenleitung; die hier vorgestellte Lösung stellt sicher, dass immer der aktuell auf dem Bus zum Busmaster am nächsten angeordnete Busknoten, bei dem das Zweitor in der Identifikationseinheit in die Identifikationsleitung geschaltet ist, erkennt, dass der Zeitpunkt für seine Kennungszuteilung gekommen ist.
(d) Danach sendet der Busmaster eine zweite Nachricht an den weiteren Busknoten, von dem die erste Nachricht stammt, wobei in dieser zweiten Nachricht die Kennung für diesen Busknoten enthalten ist; d.h., da der Busmaster "weiß", dass die Kennungen sukzessive vom auf dem Kommunikationsbus zum Busmaster nächstliegenden Busknoten bis zum Busknoten am anderen Busende vergeben werden, sind die zu vergebenden bzw. vergebenen Kennungen an die Busknoten eindeutig auf dem Kommunikationsbus verortbar, d.h. einer Position auf dem Kommunikationsbus zuordenbar. Eine Zuordnung von jeweiliger Busknoten-Kennung und der am Busknoten angeschlossenen Funktionalität oder Modalität (Sensor, Aktor, Steuergerät etc.) kann beispielsweise mittels einer in der jeweiligen ersten Nachricht zusätzlich enthaltenen Information oder auch nach der Bus-Initialisierung mittels einer zum jeweilig maßgeblichen Kommunikationsprotokoll konformen Kommunikation über die wenigstens eine Datenleitung erfolgen.
(e) Falls der weitere Busknoten am anderen Ende des Kommunikationsbusses angeordnet ist, beendet der Busmaster das Identifikationsverfahren, andernfalls wiederholt er die vorstehenden Schritte (c) bis (e).

In einer Weiterbildung des Verfahrens gemäß dem dritten Aspekt kann im Schritt (c) der Busmaster ermitteln, ob der weitere Busknoten am anderen Ende des Kommunikationsbusses angeordnet ist. Beispielsweise kann der Busmaster diese Information einer Anzeige in der ersten Nachricht vom aktuell mit dem Busmaster kommunizierenden Busknoten entnehmen. Eine weitere Möglichkeit ist, dass der Busmaster diese Information selbst anhand des Spannungspegels auf der Identifikationsleitung (IDT) erkennt; sobald der letzte Busknoten, der damit das Busende bildet seine eindeutige Kennung erhalten hat, stellt dieser ebenfalls eine direkte Verbindung zwischen dem IDT-Eingang und IDT-Ausgang für die Identifikationsleitung her. Folglich ist die Identifikationsleitung bis ans Busende durchgeschleift und dort unbeschaltet und der Spannungspegel auf der Identifikationsleitung wird auf den Pegel der vom Busmaster gekoppelten vorbestimmten Spannung ansteigen.

Ein vierter Aspekt betrifft ein Verfahren zum Empfang einer eindeutigen Kennung an einem Busknoten Kommunikationsbussystems mit Busknoten gemäß dem ersten Aspekt. Dabei ist ein, ein Ende des Bussystems bildender Busknoten als Busmaster konfiguriert und wenigstens ein weiterer Busknoten, der als Slave konfiguriert ist, erhält eine eindeutige Kennung von dem Busmaster mittels der folgenden Schritte:
(i) Zuerst schaltet der weitere Busknoten in Reaktion auf Erkennen des Initialisierungszustands für den Kommunikationsbus seine Identifikationseinheit anstelle einer direkten Verbindung zwischen den IDT-Eingang und den IDT-Ausgang für die Identifikationsleitung (IDT); wie oben im Zusammenhang mit dem korrespondierenden Verfahren gemäß dem dritten Aspekt erläutert, kann der weitere Busknoten den Initialisierungszustand anhand eines vorbestimmten Spannungspegels bzw. einer vorbestimmten Änderung des Spannungspegels auf der Identifikationsleitung erkennen. Im Falle von mehreren weiteren Busknoten sind zu Beginn der Kennungsvergabe in allen Busknoten die Identifikationseinheiten in die Identifikationsleitung geschaltet.
(ii) Der Busknoten bzw. die Busknotensteuerung des Busknotens überwacht dann den Spannungspegel auf der Identifikationsleitung am IDT-Eingang. Sobald ein vorbestimmter Spannungspegel am IDT-Eingang erfasst wird, erkennt die Busknotensteuerung des weiteren Busknotens, dass der Zeitpunkt gekommen ist, an dem genau dieser Busknoten mit dem Busmaster kommunizieren darf, um seine eindeutige Kennung zu erhalten. Hierzu sendet zunächst die Busknotensteuerung des weiteren Busknotens mittels der Kommunikationseinheit auf der wenigstens einen Datenleitung eine erste Nachricht an den Busmaster; mittels dieser ersten Nachricht erfährt der Busmaster, dass jetzt ein weiterer Busknoten auf die Zuweisung einer eindeutigen Kennung wartet, d.h. entsprechend dem korrespondierenden Verfahren gemäß dem dritten Aspekt kann dann der Busmaster die zweite Nachricht auf dem Kommunikationsbus senden, die dadurch, dass zu diesem Zeitpunkt nur dieser eine weitere Busknoten Nachrichten empfängt, genau an diesen weiteren Busknoten gerichtet ist. Somit kann dank der hier vorgestellten Lösung der Busmaster mit einem Slave kommunizieren, obgleich der Slave noch keine eigene Adresse bzw. Kennung besitzt.
(iii) Der weitere Busknoten empfängt die zweite Nachricht, welche eine eindeutige Kennung für diesen Busknoten enthält; die Kennung kann in der Busknotensteuerung oder der Kommunikationseinheit des Busknotens abgelegt bzw. gespeichert werden und steht so für die zukünftige Kommunikation auf dem Kommunikationsbus zur Verfügung.
(iv) Abschließend schaltet die Busknotensteuerung wieder die direkte Verbindung anstelle der Identifikationseinheit zwischen den IDT-Eingang und den IDT-Ausgang für die Identifikationsleitung (IDT); dadurch wird automatisch sichergestellt, dass der Spannungspegel eines ggf. nachfolgenden weiteren Busknotens auf bzw. über den vorbestimmten Spannungspegel ansteigen kann und dieser weitere Busknoten den Nachrichtenaustausch mit dem Busmaster zur Kennungsvergabe durchführen kann.

In einer Weiterbildung des Verfahrens gemäß dem vierten Aspekt kann die Busknotensteuerung im Schritt (ii) eine Anzeige, gemäß welcher der zweite Busknoten am anderen Ende des Bussystems angeordnet ist, in die erste Nachricht einfügen oder ein in der Nachricht hierfür vorgesehenes Flag setzen, falls der IDT-Ausgang unbeschaltet ist; dies kann die Busknotensteuerung beispielsweise durch Überwachen des Spannungspegels am IDT-Ausgang feststellen.

In einer Weiterbildung des Verfahrens gemäß dem vierten Aspekt kann, wenn der Busknoten eine Busterminierungseinheit aufweist, die Busknotensteuerung im Schritt (ii) die Busterminierungseinheit für jede der wenigstens einen Datenleitung zuschalten bzw. aktivieren; da - wie vorstehend erläutert die Busknotensteuerung feststellen kann, wenn der Busknoten an einem Ende des Kommunikationsbuses angeordnet ist, kann diese Information für eine selbstständige Busterminierungsfunktionalität eines Busknotens genutzt werden.

Die vorstehend erläuterten Aspekte eignen sich besonders, um ein bekanntes Bussystem, wie beispielsweise das bekannte Controller Area Network (CAN)-BUS-System, welches in der ISO 11898 spezifiziert ist, um die Funktionalität der erläuterten "Bus-Initialisierung" und ggf. der "selbständigen Bus-Terminierung" zu erweitern.

Die Erfindung eignet sich besonders für eine besonders einfach konfigurierbare Vernetzung von Komponenten einer technischen Anlage, Maschine bzw. eines technischen Gerätes, wie beispielsweise der elektrischen Komponenten einer Röntgeninspektionsanlage. Einzelnen Komponenten der Röntgeninspektionsanlage, wie Steuergeräte, Sensoren und Aktoren, können als Busknoten mittels eines Kommunikationsbusses verbunden werden. Hinsichtlich der Busknoteneigenschaften können die Komponenten dann gemäß der hier vorgeschlagenen Lösung konfiguriert sein. Dann kann besonders einfach den Busknoten eine Kennung (Adresse bzw. ID) zugewiesen sowie der Bus automatisch korrekt terminiert werden.

Die im Zusammenhang mit dem dritten und vierten Aspekt erläuterten Verfahren für die Kennungsvergabe sowie eine selbstständige Busterminierung kann grundsätzlich mittels entsprechender elektrischer Schaltungsmaßnahmen, bevorzugt in Kombination mit einem entsprechenden Steuerprogramm in einer programmierbaren Schaltung, z.B. in einem programmierbaren Mikrokontroller beispielsweise einem P8xC592 oder P8xCE598 von NXP (vormals Philips), in dem die Busknotensteuerung implementiert werden kann, umgesetzt werden.

D.h., die Verfahren können mittels Softwareprogramm im jeweiligen Mikrokontroller der Busknoten, der dann als zentraler Busknoten die Funktion eines Masters bzw. bei den weiteren Busknoten die Funktion Slave hat, implementiert werden. Dieser die Busknotensteuerung implementierende Mikrokontroller ist dann im Wesentlichen zur Durchführung des oben beschriebenen Verfahrens zu konfigurieren, d.h. zu programmieren. Ein solcher Mikrokontroller ist in bekannter Weise nach Art eine Computersystems aufgebaut, d.h. es gibt einen Prozessor mit zentraler Recheneinheit mit internem Speicher oder auch externem Speicher, der für die Software nicht flüchtig und für Arbeitsdaten als ein Speicher nach Art eines RAM (Random-Access-Memory) ausgeführt sein kann. Zur Interaktion mit den Bestandteilen des Busknotens wie Kommunikationseinheit, Identifikationseinheit als auch mit der an den jeweiligen Busknoten angebundenen Funktionalität oder Modalität (Aktor, Sensor etc.) besitzt ein solcher Mikrokontroller entsprechende Schnittstellen über die nach Bedarf Daten vom Mikrokontroller ausgegeben oder erhalten werden können.

Alternativ zur Implementierung mittels eines programmierbaren Mikrokontrollers, ist es auch denkbar, die notwendigen Schritte bzw. Maßnahmen der Verfahren direkt mittels einer entsprechenden digitalen elektronischen Schaltung, beispielsweise mittels einer fest verdrahteten Logik bzw. konfigurierbaren Logik zu implementieren. Eine solche elektronische Schaltung kann besonders flexibel mittels eines integrierten Schaltkreises der Digitaltechnik implementiert werden, in den eine gewünschte logische Schaltung programmiert werden kann. D.h., zur Integration eines der Verfahren könnte auch ein programmierbarer Logikbaustein, z. B. ein PLD (Programmable Logic Device), oder ein FPGA (Field Programmable Gated Array), verwendet werden, der dann als zusätzliche Funktionalität den Busknoten mit entsprechender Anbindung an die anderen Bestandteile wie Busknotensteuerung, Kommunikationseinheit sowie Identifikationseinheit ergänzt.

Somit ist alternativ zur Implementierung mittels eines Computerprogramms für einen Mikrokontroller die Implementierung des Verfahrens mittels einer spezifischen Konfiguration, d.h. mit einem Konfigurationsprogramm oder einer Konfigurationsdatei, eines oder mehrerer flexibel programmierbaren Logikbausteins möglich. Anders als bei der Programmierung eines Mikrokontrollers als Beispiel für eine Computerimplementierung bezieht sich dann der Begriff Programm nur in zweiter Linie auf die Vorgabe zeitlicher Abläufe im Baustein, sondern vor allem auf die Definition von dessen Funktionsstruktur. Durch die Programmierung von Strukturvorschriften wird dabei die grundlegende Funktionsweise einzelner universeller Blöcke im Logikbaustein und deren Verschaltung untereinander festgelegt, d.h. konfiguriert.

### Kurzbeschreibung der Zeichnungsfiguren

Weitere vorteilhafte Ausgestaltungen der Erfindung, sowie Ausführungsbeispiele hierzu, werden nachstehend in Verbindung mit den beigefügten Zeichnungsfiguren näher erläutert. Funktionsähnliche Bauteile oder Komponenten sind teilweise mit gleichen Bezugszeichen versehen. Die innerhalb der Beschreibung des Ausführungsbeispiels verwendeten Begriffe "links", "rechts", "oben", "unten" beziehen sich auf die Zeichnungsfiguren in einer Ausrichtung mit normal lesbaren Figurenbezeichnungen und Bezugszeichen.
Figur 1 veranschaulicht den grundsätzlichen Aufbau eines Bussystems;
Figur 2 veranschaulicht schematisch den grundsätzlichen Aufbau eines Bussystems gemäß dem Controller Area Network Standard;
Figur 3 veranschaulicht schematisch den prinzipiellen Aufbau eines CAN-Busknotens, der als Kommunikationsschnittstelle zum CAN-Bus für eine Komponente einer Anlage, Maschine oder eines Gerätes dient;
Figur 4 veranschaulicht schematisch den prinzipiellen Aufbau eines CAN-Busknotens, der gemäß einem ersten Aspekt der Erfindung eine Identifikationseinheit zum Anschluss an eine Identifikationsleitung und eine Busterminierungseinheit aufweist;
Figur 5 zeigt schematisch eine mögliche Ausführungsform einer erfindungsgemäßen Identifikationseinheit;
Figur 6 zeigt schematisch eine mögliche Ausführungsform einer Busterminierungseinheit;
Figur 7 zeigt zur Veranschaulichung der erfindungsgemäßen Kennungsvergabe an Busknoten einen CAN-Bus mit einem Master-Busknoten und drei Slave-Busknoten, wobei die Identifikationseinheiten aller Busknoten im Initialisierungszustand zu Beginn der Kennungsvergabe durch den Master gezeigt sind;
Figuren 8a bis 8d veranschaulichen das erfindungsgemäße Prinzip der sukzessive ablaufenden Kennungszuweisung an die einzelnen Busknoten beginnend mit dem zum Master nächsten Busknoten bis hin zum Busknoten am dem Master gegenüber liegenden Busende;
Figur 9 ist ein Spannungspegel-Diagramm, welches den Spannungspegel auf der Identifikationsleitung veranschaulicht; und
Figur 10 ist ein Spannungspegel-Diagramm, welches den Spannungspegel auf der Identifikationsleitung bei Anfügung eines neuen Busknotens an einen bereits konfigurierten Bus veranschaulicht.

### Detaillierte Beschreibung der Ausführungsbeispiele

In der nachfolgenden Beschreibung werden zahlreiche spezifische Einzelheiten der dargelegt. Es versteht sich jedoch, dass weitere Ausführungsformen auch ohne diese spezifischen Einzelheiten möglich sind. Dem Fachmann bekannte Schaltungen, Strukturen und Verfahren werden hier nicht im Detail besprochen, um das Verständnis der vorliegenden Beschreibung nicht unnötig zu erschweren.

In der nachfolgenden Beschreibung und in den Ansprüchen werden ggf. die Begriffe "gekoppelt" und "verbunden/angeschlossen" sowie davon abgeleitete Begriffe benutzt. Es versteht sich, dass diese Begriffe nicht als Synonyme zu betrachten sind. Bei spezifischen Ausführungsformen kann vielmehr "verbunden/angeschlossen" andeuten, dass zwei oder mehr Elemente in direktem physischem oder elektrischem Kontakt miteinander stehen. "Gekoppelt" kann bedeuten, dass zwei oder mehr Elemente zusammenwirken oder sich gegenseitig beeinflussen, wobei sie in direktem, aber auch indirektem physischem oder elektrischem Kontakt miteinander stehen können.

Der Begriff "Prozessor" kann sich auf ein beliebiges Gerät oder einen Teil eines Geräts beziehen, das (der) elektronische Daten aus Registern und/oder einem Speicher verarbeitet, um die betreffenden elektronischen Daten in andere elektronische Daten umzusetzen, die in Registern und/oder einem Speicher gespeichert werden können. Eine "Rechnerplattform" kann einen Prozessor oder mehrere Prozessoren umfassen.

Falls nicht anderweitig angegeben, deutet im vorliegenden Zusammenhang der Gebrauch der Ordinaladjektive "erster", "zweiter", "dritter" usw. zur Bezeichnung eines gemeinsamen Objekts lediglich an, dass man sich auf verschiedene Beispiele von gleichartigen Objekten bezieht, und soll nicht implizieren, dass die so bezeichneten Objekte in einer gewissen zeitlichen, räumlichen, Rangordnungs- oder sonstigen Reihenfolge auftreten müssen.

Diverse Ausführungsformen können in einer einzigen oder in einer Kombination von Hardware, Firmware und Software realisiert werden. Alternativ oder ergänzend können Ausführungsformen teilweise oder vollständig auch als auf einem maschinenlesbaren Medium gespeicherte Anweisungen realisiert werden, die zur Durchführung der hierin beschriebenen Operationen von einer Rechnerplattform oder einem Mikrokontroller gelesen und ausgeführt werden können. Ein maschinenlesbares Medium kann ein beliebiger Mechanismus zum Speichern, Übertragen oder Empfangen von Information in einer von einer Maschine (z.B. einem Computer) lesbaren Form sein. Bei dem maschinenlesbaren Medium kann es sich zum Beispiel um einen Nur-Lese-Speicher (ROM), einen Direktzugriffsspeicher (RAM), eine Magnetspeicherplatte, ein optisches Speichermedium, ein Flash-Speichergerät, optisch, akustisch oder auf sonstige Art und Weise weitergeleitete Signale (z.B. Trägerwellen, Infrarotsignale, digitale Signale usw.), die Schnittstellen und/oder Antennen, die diese Signale aussenden und/oder empfangen, usw. handeln.

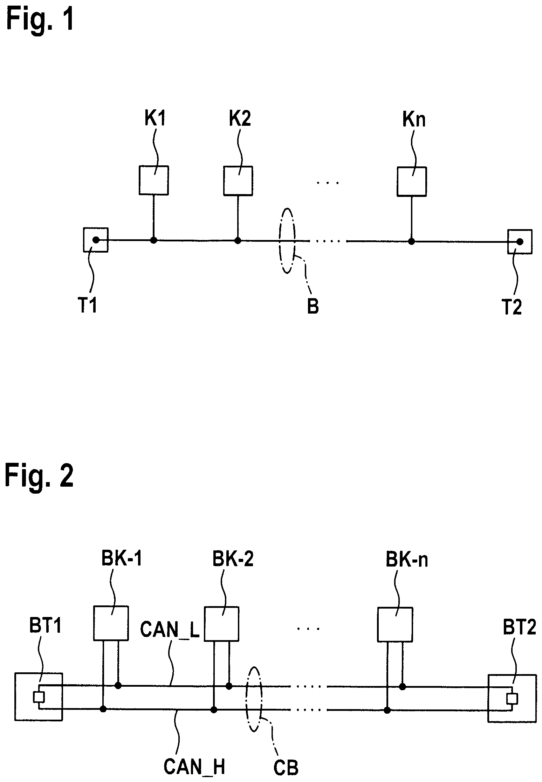

Figur 1 veranschaulicht den grundsätzlichen Aufbau eines Bussystems. Grundsätzlich kann ein Bussystem verschiedenste physische Topologien aufweisen. Für die hier vorgestellte Lösung zur Vereinfachung der Buskonfiguration, die insbesondere eine automatische ortsmäßige Identifikation der Busteilnehmer, d.h. der einzelnen Busknoten ermöglicht, wird ein Bussystem mit Linien-Topologie bevorzugt. Figur 1 zeigt einen Kommunikationsbus B an den mehrere Komponenten einer Anlage, Maschine oder eines Geräts als Busteilnehmer K1, K2, ..., Kn als Busknoten angeschlossen sind. Reflexionen an den Leitungsenden des Kommunikationsbus B werden durch entsprechende Busabschlüsse (Terminierungen) T1 bzw. T2 an den Enden des Busses verhindert (Busterminierung). Diese Terminierung kann grundsätzlich durch einen geeigneten Abschlusswiderstand oder ein RC-Glied, aber auch als aktive Terminierung mit einem entsprechenden Spannungsregler erfolgen, der den Ruhepegel auf der zugehörigen Busleitung vorgibt.

Bisher werden üblicherweise bei Anlagen, Maschinen oder Geräten die Komponenten manuell mittels eines geeigneten Bussystems verbunden. Dabei muss jedoch derzeit eine aufwändige Konfiguration der Busknoten per Schalter oder Setzen von Drahtbrücken (Jumper) erfolgen. Diese Konfiguration wird beim Zusammenbau des Systems festgelegt und ist später ebenfalls nur mit Aufwand wieder zu ändern/anzupassen.

Figur 2 veranschaulicht schematisch den grundsätzlichen Aufbau eines Bussystems gemäß dem Controller Area Network Standard, der beispielsweise in der ISO 11989 definiert ist. Für ein leichteres Verständnis der Erfindung wird in der folgenden Beschreibung der Ausführungsbeispiele als Bussystem der CAN-Bus verwendet. Es versteht sich aber, dass das erfindungsgemäße Prinzip auf andere Bussysteme übertragbar ist. Mit anderen Worten ist die Erfindung nicht auf einen CAN-Bus und auf entsprechend eingerichtete CAN-Busknoten beschränkt.

Der CAN-Bus CB in Figur 2 besteht im Wesentlichen aus zwei differentiell angesteuerten Kommunikationsleitungen CAN_L und CAN_H. Bei einer Kommunikation wird auf der Leitung CAN_L ein negiertes CAN-Signal (Dominant Low) und auf der Leitung CAN_H ein positives CAN Signal (Dominant High) übertragen. Grundsätzlich kann der CAN-Bus CB noch weitere Leitungen (in Figur 2 nicht gezeigt) aufweisen, beispielsweise eine Leitung CAN-GND (Masse) zur Bereitstellung eines Bezugspotentials an alle Busteilnehmer. Optional können noch eine Leitung VCC zur Bereitstellung einer Versorgungsspannung, eine Leitung GND zur Bereitstellung einer Geräte-Masse, d.h. eines Bezugspotentials an die mit dem jeweiligen Busknoten verbundene Gerätekomponente, sowie die Schirmung des Bus-Kabels CAN-SHLD in der Busverkabelung vorhanden sein. An den Busenden wird der CAN-Bus CB mittels jeweils beispielsweise mittels eines Abschlusswiderstands mit 120Ohm als Busterminierungen BT1 bzw. BT2 abgeschlossen.

Auf dem CAN-Bus kann beispielsweise eine Kommunikation gemäß dem "CANopen" - ein auf CAN basierendes Kommunikationsprotokoll - verwendet werden, welches sich besonders für die Vernetzung innerhalb komplexer Geräte eignet. CANopen wird seit 1995 von der Organisation "CAN in Automation (CiA)" gepflegt und ist als Europäische Norm EN 50325-4 standardisiert.

Beim CANopen ist es so, dass wenn ein CAN-Bus-Gerät eine Nachricht absendet, es dies in der Erwartungshaltung tut, dass es einen Empfänger gibt. D.h., jeder Busteilnehmer benötigt eine eindeutige Kennung (ID oder Adresse) zur Identifikation, damit ein CAN-Bus-Gerät eine Nachricht zu einem bestimmten Empfänger senden kann. Hierfür ist Kenntnis der jeweiligen Busknoten-Kennung erforderlich, um die Nachricht zu einem bestimmten Knoten zu senden. Für das CANopen Protokoll ist daher u.a. vorgesehen, dass jeder Busteilnehmer (Busknoten) eine Kennung (Knoten ID bzw. Knoten-Adresse) zugewiesen bekommt. Die vorliegende Erfindung stellt eine Möglichkeit bereit, um dies sehr einfach quasi automatisch durchzuführen.

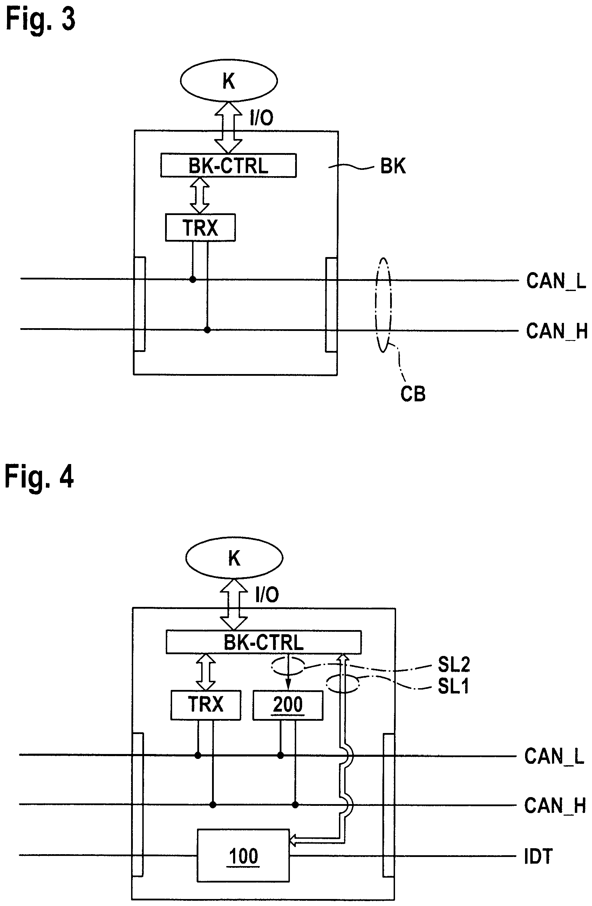

Figur 3 veranschaulicht schematisch den prinzipiellen Aufbau eines CAN-Busknotens, der als Kommunikationsschnittstelle zum CAN-Bus CB für eine Komponente K einer Anlage, Maschine oder eines Gerätes dient. Im Wesentlichen weist der Busknoten BK eine Kommunikationseinheit TRX, die zur Kommunikation mit den Datenleitungen CAN_L und CAN_H des Kommunikationsbusses CB koppelbar ist, auf; dies kann beispielsweise ein CAN-Bussteuerungsschnittstellenbaustein wie der PCA82C250T der NXP (vormals Philips) sein. Der Busknoten BK weist weiter eine Busknotensteuerung BK-CTRL, die betriebsmäßig mit der Kommunikationseinheit TRX gekoppelt ist, auf; dies kann beispielsweise der oben genannte Mikrokontroller mit on-chip CAN P8xC592 der NXP (vormals Philips) sein.

Figur 4 veranschaulicht nun im Vergleich zum bekannten Busknoten der Figur 3 schematisch den prinzipiellen Aufbau eines CAN-Busknotens, der gemäß einem ersten Aspekt der Erfindung eine Identifikationseinheit 100 zum Anschluss an eine Identifikationsleitung IDT sowie eine Busterminierungseinheit 200 aufweist. Die Busknotensteuerung BK-CTRL ist mittels jeweiliger Eingangs- und/oder Steuerleitungen SL1, SL2 betriebsmäßig mit der Identifikationseinheit 100 und der Busterminierungseinheit 200 verbunden.

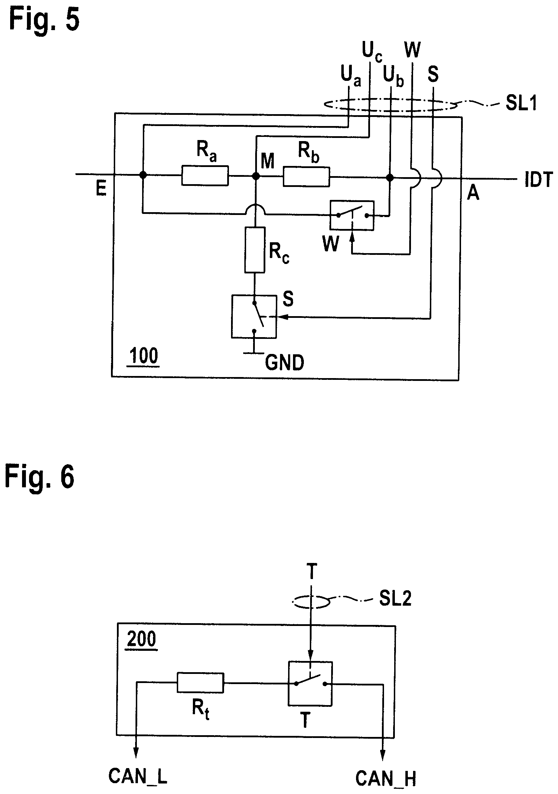

Figur 5 zeigt schematisch eine mögliche Ausführungsform einer erfindungsgemäßen Identifikationseinheit, die betriebsmäßig mit der Busknotensteuerung BK-CTRL (Figur 4) über Eingangs- und/oder Steuerleitungen SL1 gekoppelt ist.

Mittels der Identifikationseinheit 100 kann wahlweise anstelle einer direkten Verbindung zwischen einen IDT-Eingang E und einen IDT-Ausgang A für die Identifikationsleitung IDT ein Zweitor zwischengeschaltet werden.

Erfindungsgemäße ist dieses Zweitor als elektrische Schaltung derart konfiguriert, dass bei einer seriellen Verschaltung der Identifikationsleitung von einem ersten Busknoten mit wenigsten einem zweiten Busknoten für die Busknotensteuerung BK-CTRL die Position des ersten Busknoten anhand eines Vergleichs der Spannung an dem IDT-Eingang E mit einem vorbestimmten Schwellwert Us unabhängig von der Anzahl der zweiten Busknoten identifizierbar ist.

Figur 5 zeigt ein mögliches Ausführungsbeispiel für ein die vorstehenden Anforderungen erfüllendes Zweitor. Das Zweitor ist ein passives Widerstandnetzwerk mit wenigstens einem seriell mit der Identifikationsleitung IDT verschaltbaren ohmschen Widerstand Ra bzw. Rb sowie mit wenigstens einem zwischen die Identifikationsleitung IDT und ein Bezugspotential GND verschaltbaren ohmschen Widerstand Rc.

Das Zweitor der in Figur 5 gezeigten Ausführung ist ein symmetrisches Zweitor und ist als eine T-Schaltung aus drei T-förmig verschalteten Widerständen Ra, Rb, Rc gebildet. Der erste Widerstand Ra und der zweite Widerstand Rb sind seriell in die Identifikationsleitung IDT verschaltbar. Der dritte Widerstand Rc ist zwischen die vom Verbindungspunkt zwischen dem ersten und dem zweiten Widerstand Ra, Rb gebildete Mitte M der T-Schaltung und das Bezugspotential (GND) verschaltbar.

Das "Verschalten" erfolgt durch entsprechende Ansteuerung der Schalter W und S. Um eine direkte Verbindung zwischen den IDT-Eingang und den IDT-Ausgang herzustellen ist der Schalter W zu schließen (d.h., W=1) und der Schalter S zu öffnen (d.h., S=0). Soll die T-Schaltung aus den Widerständen Ra, Rb, Rc in die Identifikationsleitung geschaltet werden, ist der Schalter W zu öffnen (W=0) und der Schalter S zu schließen (S=1).

Figur 6 zeigt schematisch eine mögliche Ausführungsform einer Busterminierungseinheit 200. Im Kontext der hier zur Beschreibung gewählten Anwendungsumgebung CAN-Bus besteht die Busterminierungseinheit 200 aus einem Abschlusswiderstand Rt mit 120Ohm, der mittels eines von der Busknotensteuerung BK-CTRL über die Eingangs- und/oder Steuerleitung SL2 betätigbaren Schalter T zwischen die beiden Kommunikationsleitungen CAN_L und CAN_H geschaltet werden kann.

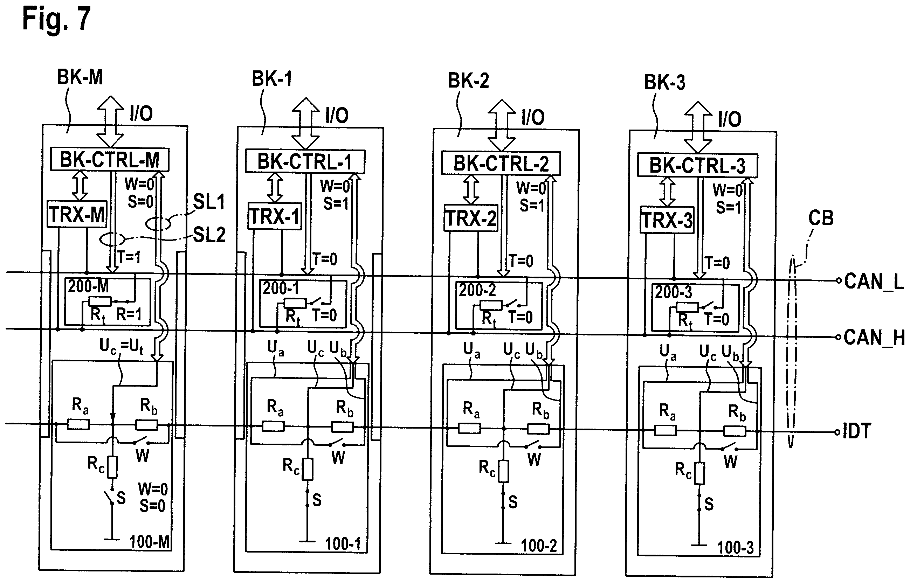

Figur 7 zeigt zur Veranschaulichung der erfindungsgemäßen Kennungsvergabe an Busknoten einen CAN-Bus CB mit einem Master-Busknoten BK-M und drei Slave-Busknoten BK-1, BK-2, BK-3. Die Identifikationseinheiten 100-M, 100-1, 100-2, 100-3 aller Busknoten sind im Initialisierungszustand zu Beginn der Kennungsvergabe durch den Master BK-M gezeigt. D.h., an allen Slave-Busknoten BK-1, BK-2, BK-3 ist das jeweilige Zweitor in den Identifikationseinheiten 100-1, 100-2, 100-3 in die Identifikationsleitung IDT geschaltet; hierzu sind in allen Identifikationseinheiten die Schalter W jeweils geöffnet (W=0) und die Schalter S jeweils geschlossen (S=1). Des Weiteren ist an allen Slave-Busknoten BK-1, BK-2, BK-3 die jeweilige Busterminierungseinheit 200-1, 200-2, 200-3 deaktiviert (d.h. T=0).

Da der Master-Busknoten BK-M ein Ende des CAN-Bus CB bildet, ist die Busterminierungseinheit 200-M des Master BK-M bereits aktiviert (d.h. T=1).

Der Master-Busknoten BK-M ist grundsätzlich identisch zu den Slave-Busknoten aufgebaut. Um die Identifikationsleitung mit einer vorbestimmten Spannung koppeln zu können, kann die Bussteuerung BK-CTRL-M über die Eingangs- und/oder Steuerleitungen SL1 eine entsprechende Spannung an die Mitte der T-Schaltung der Identifikationseinheit 100-M anlegen.

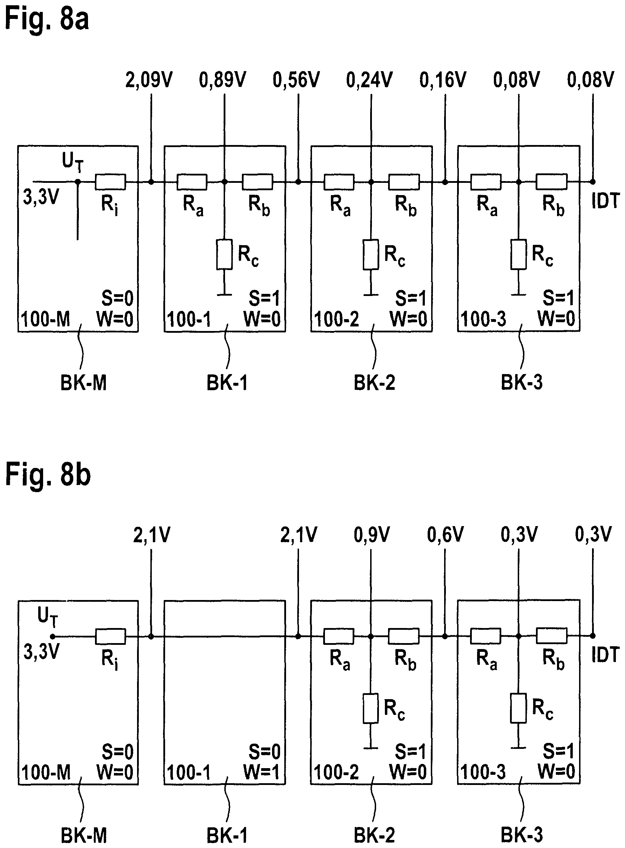

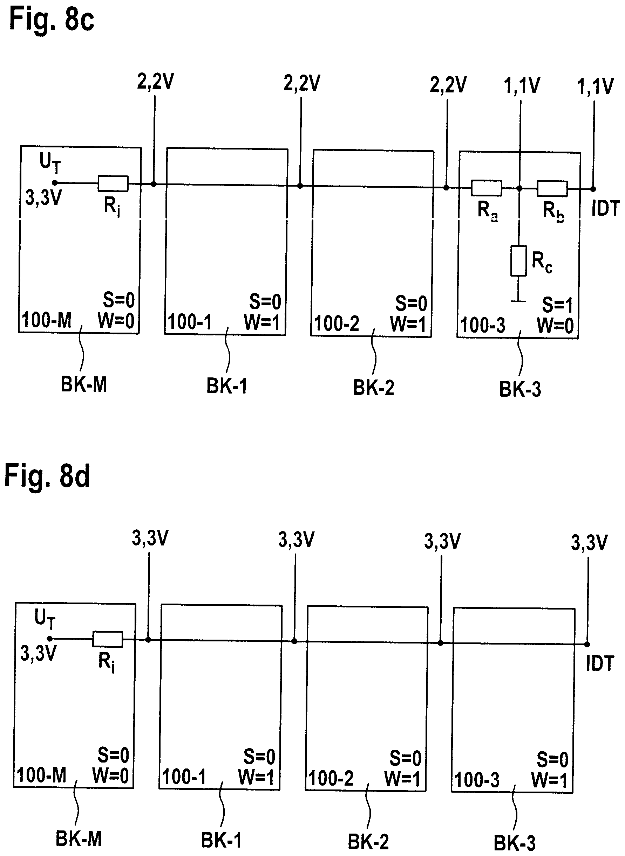

Figuren 8a bis 8d veranschaulichen das erfindungsgemäße Prinzip der sukzessive ablaufenden Kennungszuweisung an die einzelnen Busknoten BK-1, ..., BK-3 beginnend mit dem zum Master-Busknoten BK-M nächsten Busknoten BK-1 bis hin zum Busknoten BK-3, der sich an dem dem Master BK-M gegenüber liegenden Busende befindet.

Für eine übersichtliche und vereinfachte Darstellung sind in den Figuren 8a bis 8d jeweils nur die Identifikationseinheit 100-M, 100-2, ..., 100-3 mit Angabe der zugehörigen Schalterstellungen für die jeweiligen Schalter S und W sowie der sich jeweils daraus ergebende schaltungstechnische Zustand gezeigt. Mit anderen Worten, wenn in einer Identifikationseinheit aufgrund der aktuellen Schalterstellung der Schalter S und W in der zugehörigen Identifikationseinheit die T-Schaltung aus den drei Widerständen Ra, Rb, Rc in die Identifikationsleitung geschaltet ist, dann ist entsprechend die T-Schaltung dargestellt, im anderen Fall, ist die direkte Verbindung zwischen dem IDT-Eingang und dem IDT-Ausgang dargestellt.

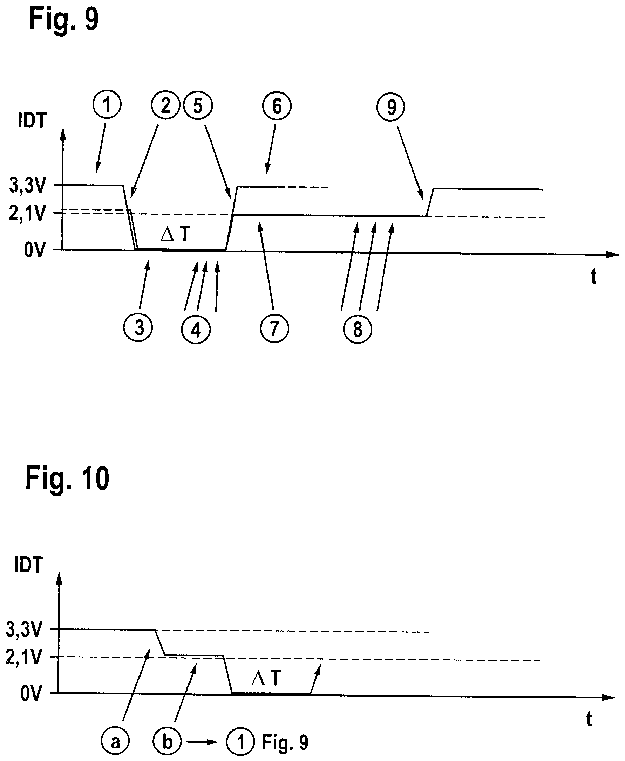

Figur 9 ist ein Spannungspegel-Diagramm, welches den Spannungspegel auf der Identifikationsleitung IDT über der Zeit t während der Businitialisierung veranschaulicht. In dem Diagramm sind in Kreisen Punkte # angegeben, auf die im Folgenden an entsprechender Stelle Bezug genommen wird.

Um die Funktion der erfindungsgemäßen Verfahren anschaulich zu beschreiben, sei angenommen, dass im Master-Busknoten BK-M mit 3,3 Volt als Speisespannung für die Identifikationsleitung IDT gearbeitet wird. Weiter sei angenommen, dass alle Ra = Rb = Rc = R gilt. In der folgenden Beschreibung des Ablaufs bei der Businitialisierung werden folgende Abkürzungen verwendet: T = Schalter für Terminator (d.h., T=1 Busterminierungseinheit aktiv, T=0 Busterminierungseinheit deaktiviert), W = Schalter für die T-Schaltungsüberbrückung, d.h. die direkte Verbindung von IDT-Eingang zum IDT-Ausgang einer Identifikationseinheit, S = Schalter für T-Schaltungs-Pull-down-Widerstand Rc, d.h. für die Verbindung von der T-Schaltungsmitte M zum Bezugspotential über den Widerstand Rc, Ua = jeweils die Spannung auf der Identifikationsleitung am IDT-Eingang (Links der Identifikationseinheit), Ub = jeweils die Spannung auf der Identifikationsleitung am IDT-Ausgang (Rechts der Identifikationseinheit), und Uc = die jeweilige Spannung an der T-Schaltung-Mitte, d.h. am Verbindungspunkt M (Figur 5) zwischen Ra und Rb.

Im Master-Busknoten BK-M läuft dann unter Kontrolle der Busknotensteuerung BK-CTRL-M Folgendes ab: Zu Beginn ist der Spannungspegel auf der Identifikationsleitung IDT undefiniert (Punkt 1 in Figur 9). Daher steuert die Master-Busknotensteuerung BK-CTRL-M zuerst im Master den Schalter T in den Zustand "aus" bzw. "geöffnet" (T=0), den Schalter W in den Zustand "aus" bzw. "geöffnet" (W=0), und den Schalter S in den Zustand "an" bzw. "geschlossen" (S=1), damit wird der Spannungspegel der Identifikationsleitung IDT über den T-Schaltungs-Pull-down-Widerstand Rc auf 0 Volt gezogen (Punkt 2 in Figur 9). Dies dient dazu, den Slave-Busknoten BK-1, BK-2, BK-3 den Start der Bus-Initialisierungsphase zu signalisieren. Für die Initialisierung der weiteren Busknoten wartet der Master BK-M eine Zeitdauer ab (Punkt 4 in Figur 9).

D.h., in jedem der Slave-Busknoten läuft unter Kontrolle der jeweiligen Busknotensteuerung BK-CTRL-1, ..., BK-CTRL-3, Folgendes ab: Die Busknotensteuerungen schließen zuerst im jeweiligen Busknoten den Schalter T und den Schalter W, und öffnen den Schalter S, wie in Figur 7 bzw. 8a gezeigt.

In einem nächsten Schritt weist die Master-Busknotensteuerung BK-CTRL-M den Transceiver TRX-M an, sich zu initialisieren. Anschließend steuert die Master-Busknotensteuerung BK-CTRL-M den Schalter T für die Busterminierungseinheit 200-M so, dass das vom Master-Busknoten BK-M gebildete Busende korrekt terminiert ist, den Schalter S im Fußpunkt der T-Schaltung so, dass die Verbindung zum Bezugspotential GND unterbrochen ist. Anschließend speist die Master-Busknotensteuerung BK-CTRL-M die Mitte der T-Schaltung mit der vorbestimmten Spannung (hier angenommen 3,3V). Als Folge davon steigt der Spannungspegel auf der Identifikationsleitung IDT wieder an.

Sollte die Bussteuerung BK-CTRL-M des Masters feststellen, dass Ua und Ub kleiner 2,8 Volt sind, dann deutet dies darauf hin, dass der Master-Busknoten BK-M nicht ein Busende bildet, sondern an beiden Seiten mit einem weiteren Busknoten verbunden ist. In diesem Fall kann die Businitialisierung mit einer entsprechenden Fehlermeldung abgebrochen werden.

Ebenso kann die Bussteuerung BK-CTRL-M des Masters feststellen, dass Ua und Ub größer 2,8 Volt sind, d.h. schließlich auf 3,3V ansteigen (Punkt 6 Fig.9). Dies deutet darauf hin, dass keine weiteren CAN-Bus-Knoten angeschlossen sind. Auch in diesem Fall kann die Bus-initialisierung mit einer entsprechenden Fehlermeldung abgebrochen werden.

Wenn der Spannungspegel auf der Identifikationsleitung auf über 1,5V und bis etwa 2 bis 2,1 V steigt, so bedeutet dies, dass mindestens ein Slave-Busknoten der mit dem Master verbunden ist, initialisiert hat (Punkt 7 in Figur 9).

In einem nächsten Schritt wartet der Master auf eine erste Nachricht von einem der Slave-Busknoten BK-1, BK-2, BK-3.

In der Figur 8a ist der Zustand der Identifikationseinheiten 100-1, 100-2, 100-3 zum Zeitpunkt 5 in Figur 9 gezeigt. Aufgrund der über die Identifikationseinheiten verketteten T-Schaltungen verteilt sich die Spannung über den Widerständen der T-Schaltungen gemäß den bekannten physikalischen Gesetzmäßigkeiten. Weiter stellt die spezielle Konfiguration der Widerstandsnetzwerke in jedem Zweitor sicher, dass immer genau an dem nächstliegenden Slave-Busknoten BK-1 (in Figur 8a) am IDT-Eingang sich vorhersagbar ein Spannungspegel einstellt, der über einer vorbestimmbaren Schwelle liegen wird, hier beispielsweise 1,5V.

Im Slave-Busknoten BK-1 läuft nun folgendes ab: Die Busknotensteuerung BK-CTRL-1 wartet ab, bis die Spannung Ua am IDT-Eingang größer als 1,5 Volt ist (Punkt 8 in Figur 9). Daran erkennt die Busknotensteuerung BK-CTRL-1, dass der Master BK-M 3,3 V an die Identifikationsleitung IDT eingespeist hat und dass alle anderen Slave-Busknoten, d.h. hier BK-2 und BK-3 initialisiert haben.

Die Busknotensteuerung BK-CTRL-1 weist nun die Kommunikationseinheit TRX-1 an, sich zu initialisieren.

Anschließend prüft die Busknotensteuerung BK-CTRL-1, ob die Spannung am IDT-Ausgang Ub gleich der Spannung Uc an der Mitte der T-Schaltung ist. Wenn dies der Fall ist, dann zeigt dies, dass der Busknoten am Busende liegt. Am Busknoten BK-1 ist jedoch Ua = 2,09V, Uc = 0,89V und Ub = 0,56V. D.h., Ua ist größer 1,5V und Ub ist ungleich Uc, d.h., der Busknoten BK-1 ist nicht das Busende. Daher sendet die Busknotensteuerung BK-CTRL-1 eine erste Nachricht an den Master BK-M, in der dem Master mitgeteilt wird, dass der diese erste Nachricht sendende Busknoten nicht der letzte Busknoten auf dem Bus ist.

Im Master-Busknoten BK-M wird die erste Nachricht vom Slave-Busknoten BK-1 empfangen. Der Master-Busknoten BK-M sendet als Antwort eine zweite Nachricht an den Slave-Busknoten BK-1, in der eine Kennung enthalten ist, die der Slave BK-1 verwenden soll.

Die zweite Nachricht wird im Slave-Busknoten BK-1 empfangen und die Busknotensteuerung BK-CTRL-1 entnimmt der Nachricht die Kennung zur Identifikation des Busknotens BK-1 in der zukünftigen Kommunikation. Nachdem der Busknoten BK-1 seine Kennung erhalten hat, weist die Busknotensteuerung BK-CTRL-1 den Schalter W an zu schließen und den Schalter S zu öffnen. Als Folge davon stellt sich der in Figur 8b gezeigte Zustand ein. Im Vergleich zur Figur 8a befindet sich nun in der Identifikationseinheit 100-1 des Slave-Busknoten BK-1 nur eine direkte Verbindung zwischen dem IDT-Eingang und IDT-Ausgang.

Nun wird die Busknotensteuerung BK-CTRL-2 aktiv, da dort die Spannung am IDT-Eingang Ua größer der vorbestimmten Schwelle 1,5V ist (Punkt 8 in Figur 9). Am Busknoten BK-2 ist Ua = 2,1V, Uc = 0,9V und Ub = 0,6V. D.h., Ua ist größer 1,5V und Ub ist ungleich Uc, d.h., der Busknoten BK-2 ist nicht das Busende. Daher sendet die Busknotensteuerung BK-CTRL-2 eine erste Nachricht an den Master BK-M, in der dem Master mitgeteilt wird, dass der diese erste Nachricht sendende Busknoten BK-2 nicht der letzte Busknoten auf dem Bus ist.

Im Master-Busknoten BK-M wird die erste Nachricht vom Slave-Busknoten BK-2 wiederum empfangen. Der Master-Busknoten BK-M sendet auch hier als Antwort eine zweite Nachricht an den Slave-Busknoten BK-2, in der eine Kennung enthalten ist, die der Slave BK-2 verwenden soll.

Die zweite Nachricht wird im Slave-Busknoten BK-2 empfangen und die Busknotensteuerung BK-CTRL-1 entnimmt der Nachricht die Kennung zur Identifikation des Busknotens BK-2 in der zukünftigen Kommunikation. Nachdem der Busknoten BK-2 seine Kennung erhalten hat, weist die Busknotensteuerung BK-CTRL-2 wiederum den Schalter W an zu schließen und den Schalter S zu öffnen. Als Folge davon stellt sich der in Figur 8c gezeigte Zustand ein. Im Vergleich zur Figur 8b befindet sich nun auch in der Identifikationseinheit 100-2 des Slave-Busknoten BK-2 nur eine direkte Verbindung zwischen dem IDT-Eingang und IDT-Ausgang.

Nun wird die Busknotensteuerung BK-CTRL-3 aktiv, da dort die Spannung am IDT-Eingang Ua größer der vorbestimmten Schwelle 1,5V ist (Punkt 8 in Figur 9). Jetzt stellt die Busknotensteuerung BK-CTRL-3 fest, dass am Busknoten BK-3 Ua = 2,1 V, Uc = 1,1V und Ub = 1,1V. Da Ub gleich Uc ist, zeigt dies an, dass der Busknoten BK-3 am Busende liegt. Die Busknotensteuerung BK-CTRL-3 steuert nun zunächst den Schalter T für die Busterminierungseinheit 200-3 (Figur 7), um diese zu aktivieren, d.h. den Bus korrekt abzuschließen. Dann sendet die Busknotensteuerung BK-CTRL-3 eine erste Nachricht an den Master BK-M, in der dem Master mitgeteilt wird, dass der diese erste Nachricht sendende Busknoten BK-3 der letzte Busknoten auf dem Bus CB ist.

Im Master-Busknoten BK-M wird diese erste Nachricht vom Slave-Busknoten BK-3 empfangen. Der Master-Busknoten BK-M sendet als Antwort eine zweite Nachricht an den Slave-Busknoten BK-3, in der eine Kennung enthalten ist, die der Slave BK-3 zukünftig verwenden soll. Zusätzlich weiß der die Busknotensteuerung BK-CTRL-M auch, dass die Businitialisierung dann abgeschlossen ist, da alle Slave-Busknoten eine Kennung erhalten haben.

Diese zweite Nachricht wird im Slave-Busknoten BK-3 empfangen und die Busknotensteuerung BK-CTRL-3 entnimmt der Nachricht die Kennung zur Identifikation des Busknotens BK-3 in der zukünftigen Kommunikation. Nachdem der Busknoten BK-3 seine Kennung erhalten hat, weist die Busknotensteuerung BK-CTRL-3 den Schalter W an zu schließen und den Schalter S zu öffnen. Als Folge davon stellt sich der in Figur 8c gezeigte Zustand ein. Im Vergleich zur Figur 8c befindet sich dann in allen Identifikationseinheiten 100-1, 100-2, 100-3 der Slave-Busknoten BK-1, BK-2, BK-3 eine direkte Verbindung zwischen dem IDT-Eingang und IDT-Ausgang. Daher steigt der Spannungspegel auf der Identifikationsleitung auf 3,3 V (Punkt 9 in Figur 9); woran die Busknotensteuerung BK-CTRL-M ebenfalls hätte erkennen können, dass alle Busknoten BK-1, BK-2, BK-3 eine Kennung erhalten haben, d.h. es ist nicht zwingend notwendig, in der jeweiligen ersten Nachricht eine Information zu senden, die dem Master anzeigt, ob der sendende Busknoten am Busende sitzt.

Alle Busknoten können nun mittels der Kennungen (IDs) über den Kommunikationsbus kommunizieren.

Figur 10 ist ein Spannungspegel-Diagramm, welches den Spannungspegel auf der Identifikationsleitung IDT bei Anfügung eines neuen Busknotens an einen bereits konfigurierten Bus veranschaulicht.

Die Busknotensteuerung eines neuen Busknotens, der noch keine Kennung hat, kann grundsätzlich so eingerichtet sein, dass in der Identifikationseinheit das Zweitor, d.h. im Ausführungsbeispiel die T-Schaltung, in die Identifikationsleitung geschaltet wird. Folglich wird durch das Anschließen des neuen Slaves an die Identifikationsleitung IDT deren Spannungspegel von 3,3.V auf 2,2V gezogen (Punkt a in Figur 10). Die Busknotensteuerung BK-CTRL-M des Master-Busknotens BK-M kann dann entsprechend so eingerichtet sein, dass sie aufgrund dieses Spannungseinbruchs das erfindungsgemäße Bus-Initialisierungsverfahren auslöst. D.h., die Busknotensteuerung BK-CTRL-M zieht zunächst den Spannungspegel auf der Identifikationsleitung IDT auf 0V, um alle Slave-Busknoten in den Initialisierungszustand zu versetzen. Anschließend läuft das vorstehend anhand der Figur 7 bis 9 erläuterte Prozedere erneut ab, wodurch alle Busknoten entsprechend ihrem Ort auf dem Bus eine Kennung erhalten und der Bus am das Busende bildenden Busknoten korrekt abgeschlossen wird.

In einer bestimmten Anwendung der hier vorgestellten Lösung werden Komponenten einer Röntgeninspektionsanlage mittels eines CAN-Busses verbunden. Um eine Kommunikation der Busknoten zu ermöglichen, werden die Knoten des CAN-Bus-Systems wie vorstehend ausführlich dargelegt entsprechend der Verkabelung automatisch mit einer jeweiligen Kennung konfiguriert sowie der CAN-Bus im letzten, d.h. ein Busende bildenden Busknoten automatisch terminiert.

## Patentansprüche

1. Busknoten (BK; BK-1, BK-2, BK-3) mit einer Kommunikationseinheit (TRX-1, TRX-2, TRX-3), die zur Kommunikation mit wenigstens einer Datenleitung (CAN_L, CAN_H) eines Kommunikationsbusses (CB) koppelbar ist, einer Busknotensteuerung (BK-CTRL; BK-CTRL-1, BK-CTRL-2, BK-CTRL-3), die betriebsmäßig mit der Kommunikationseinheit (TRX-1, TRX-2, TRX-3) gekoppelt ist, und einer betriebsmäßig mit der Busknotensteuerung (BK-CTRL; BK-CTRL-1, BK-CTRL-2, BK-CTRL-3) gekoppelten Identifikationseinheit (100; 100-1, 100-2, 100-3), bei der wahlweise anstelle einer direkten Verbindung zwischen einen IDT-Eingang (E) und einen IDT-Ausgang (A) einer Identifikationsleitung (IDT) ein überbrückbares Zweitor zwischenschaltbar ist, wobei Identifikationsleitung (IDT) mit einem vorbestimmten Spannungspegel (U_{T}) koppelbar ist,
**dadurch gekennzeichnet,**
**dass** das Zweitor ein symmetrisches Zweitor in Form einer T-Schaltung aus drei T-förmig verschalteten Widerständen (Rₐ, R_{b}, R_{c}) ist, von denen ein erster Widerstand (Rₐ) und ein zweiter Widerstand (R_{b}) seriell mit der Identifikationsleitung (IDT) und ein dritter Widerstand (R_{c}) zwischen einem Verbindungspunkt des ersten mit dem zweiten Widerstand (Rₐ, R_{b}) und einem Bezugspotential (GND) verschaltbar sind, und
**dass** die Identifikationseinheit (100-1, 100-2, 100-3) konfiguriert ist, in einem Initialisierungszustand bei zwischengeschalteten Zweitor der Busknotensteuerung (BK-1, BK-2, BK-3) anhand eines Vergleichs einer ersten Spannung (Uₐ) an dem IDT-Eingang (E) mit einem vorbestimmten Schwellwert (Uₛ) einen Zeitpunkt für einen dem Busknoten (BK-1, BK-2, BK-3) zugeordneten Nachrichtenaustausch mit einem Busmaster (BK-M) zur Zuteilung einer eindeutigen Kennung an den Busknoten (BK-1, BK-2, BK-3) durch den Busmaster (BK-M) zu signalisieren.

2. Busknoten (BK-1, BK-2, BK-3) gemäß Anspruch 1, **dadurch gekennzeichnet, dass** der Busknoten (BK-1, BK-2, BK-3) weiter eine durch die Busknotensteuerung (BK-CTRL-1, BK-CTRL-2, BK-CTRL-3) schaltbare Busterminierungseinheit (200-1, 200-2, 200-3) für die wenigstens eine Datenleitung (CAN_L, CAN_H) aufweist.

3. Busknoten (BK-1, BK-2, BK-3) gemäß Anspruch 1 oder 2, **dadurch gekennzeichnet,**
**dass** die Identifikationseinheit (100-1, 100-2, 100-3) eingerichtet ist, der Busknotensteuerung ein erstes Signal (S1) entsprechend der ersten Spannung (Ua) am IDT-Eingang (E) zur Verfügung zu stellen, und
**dass** die Busknotensteuerung (BK-CTRL-1, BK-CTRL-2, BK-CTRL-3) eingerichtet ist, im Initialisierungszustand sobald das erste Signal (S1) anzeigt, dass die erste Spannung (Uₐ) größer als der vorbestimmte Schwellwert (Uₛ) ist,
- mittels der Kommunikationseinheit (TRX-1, TRX-2, TRX-3) über die wenigstens eine Datenleitung (CAN_L, CAN_H) eine erste Nachricht an den Busmaster (BK-M) zu senden,
- in Antwort auf die erste Nachricht vom Busmaster (BK-M) über die wenigstens eine Datenleitung (CAN_L, CAN_H) eine zweite Nachricht zu empfangen, in welcher die eindeutige Kennung für den Busknoten (BK) enthalten ist, und
- anschließend unter der eindeutigen Kennung über den Kommunikationsbus (CB) zu kommunizieren.

4. Busknoten (BK-1, BK-2, BK-3) gemäß Anspruch 3 und soweit rückbezogen auf Anspruch 2, **dadurch gekennzeichnet,**
**dass** die Identifikationseinheit (100-1, 100-2, 100-3) eingerichtet ist, der Busknotensteuerung (BK-CTRL-1, BK-CTRL-2, BK-CTRL-3) ein zweites Signal (S2) entsprechend einer zweiten Spannung (U_{b}) am IDT-Ausgang (A) und ein drittes Signal (S3) entsprechend einer dritten Spannung (U_{c}) an der Mitte der T-Schaltung zur Verfügung zu stellen, und
**dass** die Busknotensteuerung (BK-CTRL-1, BK-CTRL-2, BK-CTRL-3) eingerichtet ist, sobald das zweite Signal (S3) und das dritte Signal (S3) anzeigen, dass die zweite Spannung (U_{b}) und die dritte Spannung (U_{c}) im Wesentlichen gleich sind, die Busterminierungseinheit (200-1, 200-2, 200-3) für jede der wenigstens einen Datenleitung (CAN_L, CAN_H) zu aktivieren.

5. Busknoten (BK-1, BK-2, BK-3) gemäß Anspruch 4, **dadurch gekennzeichnet,**
**dass** die Busknotensteuerung (BK-CTRL-1, BK-CTRL-2, BK-CTRL-3) weiter eingerichtet ist, in die erste Nachricht an den Busmaster (BK-M) eine Information einzufügen, die anzeigt, dass der Busknoten (BK-1, BK-2, BK-3) an einem Ende des Kommunikationsbusses (CB) angeordnet ist.

6. Kommunikationsbussystem mit einem Kommunikationsbus (CB), der wenigstens eine Datenleitung (CAN_L, CAN_H) und eine Identifikationsleitung (IDT) aufweist, und einem Busmaster (BK-M) und mindestens einem weiteren Busknoten (BK-1, BK-2, BK-3) gemäß einem der Ansprüche 1 bis 5.

7. Kommunikationsbussystem gemäß Anspruch 6, **dadurch gekennzeichnet, dass** der Kommunikationsbus (CB) ein Controller Area Network Bus ist, in dem eine vorhandene aber unbenutzte Leitung oder eine zusätzliche Leitung als die Identifikationsleitung (IDT) eingerichtet ist.

8. Verfahren zur sukzessiven Identifikation von Busknoten (BK-1. BK-2, BK-3) eines Kommunikationsbussystems mit Busknoten (BK-1. BK-2, BK-3) gemäß einem der Ansprüche 1 bis 5, wobei ein, ein Ende des Kommunikationsbusses (CB) bildender Busknoten (BK-M), der als der Busmaster (BK-M) konfiguriert ist, an wenigstens einen weiteren Busknoten (BK-1, BK-2, BK-3), der als Slave konfiguriert ist, jeweils eine eindeutige Kennung mittels folgender Schritte vergibt:
(a) Versetzen der am Kommunikationsbus (CB) angeschlossenen weiteren Busknoten (BK-1, BK-2, BK-3) in einen Initialisierungszustand;
(b) Koppeln der Identifikationsleitung (IDT) mit einem vorbestimmten Spannungspegel (Uₜ);
(c) Empfangen auf wenigstens einer Datenleitung (CAN_L, CAN_H) einer ersten Nachricht von einem der weiteren Busknoten (BK-1, BK-2, BK-3);
(d) Senden einer zweiten Nachricht an den weiteren Busknoten (BK-2, BK-3), in der die eindeutige Kennung für den weiteren Busknoten (BK-2, BK-3) enthalten ist; und
(e) Beenden des Identifikationsverfahrens, falls der weitere Busknoten (BK-1, BK-2, BK-3) am anderen Ende des Kommunikationsbusses (CB) angeordnet ist, andernfalls
(f) Wiederholen der Schritte der Schritt (c) bis (e).

9. Verfahren gemäß Anspruch 8, **dadurch gekennzeichnet, dass** im Schritt (c) folgerndes durchgeführt wird:
Ermitteln, ob der weitere Busknoten (BK-1, BK-2, BK-3) am anderen Ende des Kommunikationsbus (CB) angeordnet ist, anhand einer Information in der ersten Nachricht oder anhand des Spannungspegels auf der Identifikationsleitung (IDT).

10. Verfahren zum Empfang einer eindeutigen Kennung in einem Busknoten (BK-1, BK-2, BK-3) eines Kommunikationsbussystems mit Busknoten (BK-M, BK-1, BK-2, BK-3) gemäß einem der Ansprüche 1 bis 5, wobei ein, ein Ende des Kommunikationsbusses (CB) bildender Busknoten (BK-M), der als der Busmaster (BK-M) konfiguriert ist und wenigstens ein weiterer Busknoten (BK-1, BK-2, BK-3), der als Slave konfiguriert ist, die eindeutige Kennung vom Busmaster (BK-M) mittels der folgenden Schritte erhält:
(i) Erkennen eines Initialisierungszustands und in Reaktion darauf Schalten des Zweitors anstelle einer direkten Verbindung zwischen den IDT-Eingang (E) und den IDT-Ausgang (A) der Identifikationsleitung (IDT);
(ii) Erfassen eines vorbestimmten Spannungspegels am IDT-Eingang (E) und in Reaktion darauf Senden auf der wenigstens einen Datenleitung (CAN_L, CAN_H) einer ersten Nachricht an den Busmaster (BK-M);
(iii) Empfangen einer zweiten Nachricht vom Busmaster (BK-M), welche die eindeutige Kennung enthält; und
(iv) Schalten der direkten Verbindung anstelle des Zweitors zwischen den IDT-Eingang (E) und den IDT-Ausgang (A) der Identifikationsleitung (IDT).

11. Verfahren gemäß Anspruch 10, **dadurch gekennzeichnet, dass** im Schritt (ii) folgendes durchgeführt wird:
Einfügen einer Information in die erste Nachricht, gemäß welcher der weitere Busknoten (BK-1, BK-2, BK-3) ermittelt hat, dass er am anderen Ende des Kommunikationsbusses (CB) angeordnet ist.

12. Verfahren gemäß Anspruch 11, **dadurch gekennzeichnet, dass** der Busknoten (BK-1, BK-2, BK-3), wenn er ermittelt hat, dass er am anderen Ende des Kommunikationsbusses (CB) angeordnet ist, eine Busterminierungseinheit (200-1, 200-2, 200-3) für die wenigstens eine Datenleitung (CAN_L, CAN_H) aktiviert.

## Claims

1. A bus node (BK; BK-1, BK-2, BK-3) with a communication unit (TRX-1, TRX-2, TRX-3) which unit can be coupled for communication with at least one data line (CAN_L, CAN_H) of a communication bus (CB) a bus node controller (BK-CTRL; BK-CTRL-1, BK-CTRL-2, BK-CTRL-3) which is operationally coupled to the communication unit (TRX-1, TRX-2, TRX-3), and an identification unit (100; 100-1, 100-2, 100-3) operationally coupled to the bus node controller (BK-CTRL; BK-CTRL-1, BK-CTRL-2, BK-CTRL-3), in which identification unit instead of a direct connection between an IDT input (E) and an IDT output (A) of an identification line (IDT), it is possible for a bridgeable two-port to be selectively interposed between them, wherein the identification line (IDT) is couplable with a predetermined voltage level (U_{T}),
**characterized in that**
the two-port is a symmetrical two-port in the form of a T-circuit of three resistors (Rₐ, R_{b}, R_{c}) connected in the form of a T, of which a first resistor (Rₐ) and a second resistor (R_{b}) can be connected serially to the identification line (IDT), and a third resistor (R_{c}) can be connected between a connection point of the first to the second resistor (Rₐ, R_{b}) and a reference potential (GND), and
that the identification unit (100-1, 100-2, 100-3) is configured, in an initialization state with interposed two-port, to signal to the bus node controller (BK-1, BK-2, BK-3), by means of a comparison of a first voltage (Uₐ) at the IDT input (E) with a predetermined threshold value (Uₛ), a time for a message exchange associated with the bus node (BK-1, BK-2, BK-3) with a bus master (BK-M) for allocation of a unique identifier to the bus node (BK-1, BK-2, BK-3) by the bus master (BK-M).

2. The bus node (BK-1, BK-2, BK-3) according to claim 1, **characterized in that** the bus node (BK-1, BK-2, BK-3) further has a bus termination unit (200-1, 200-2, 200-3) connectible by the bus node controller (BK-CTRL-1, BK-CTRL-2, BK-CTRL-3) for the at least one data line (CAN_L, CAN_H).

3. The bus node (BK-1, BK-2, BK-3) according to claim 1 or 2, **characterized in that**
the identification unit (100-1, 100-2, 100-3) is adapted to make available to the bus node controller a first signal (S1) corresponding to the first voltage (Uₐ) at the IDT input (E), and
that the bus node controller (BK-CTRL-1, BK-CTRL-2, BK-CTRL-3) is adapted, in the initialization state as soon as the first signal (S1) indicates that the first voltage (Uₐ) is greater than the predetermined threshold value (Uₛ),
- to send a first message to the bus master (BK-M) by means of the communication unit (TRX-1, TRX-2, TRX-3) via the at least one data line (CAN_L, CAN_H),
- in response to the first message from the bus master (BK-M) to subsequently receive a second message via the at least one data line (CAN_L, CAN_H), said message containing the unique identifier for the bus node (BK), and
- subsequently communicate via the communication bus (CB) using the unique identifier.

4. The bus node (BK-1, BK-2, BK-3) according to claim 3 and insofar as depending on claim 2, **characterized in**
**that** the identification unit (100-1, 100-2, 100-3) is adapted to make available to the bus node controller (BK-CTRL-1, BK-CTRL-2, BK-CTRL-3) a second signal (S2) corresponding to a second voltage (U_{b}) at the IDT output (A) and a third signal (S3) corresponding to a third voltage (U_{c}) at the middle of the T-circuit, and
**that** the bus node controller (BK-CTRL-1, BK-CTRL-2, BK-CTRL-3) is adapted, as soon as the second signal (S3) and the third signal (S3) indicate that the second voltage (U_{b}) and the third voltage (U_{c}) are substantially equal, to activate the bus termination unit (200-1, 200-2, 200-3) for each of the at least one data line (CAN_L, CAN_H).

5. The bus node (BK-1, BK-2, BK-3) according to claim 4, **characterized in that** the bus node controller (BK-CTRL-1, BK-CTRL-2, BK-CTRL-3) is further adapted to insert an information item in the first message to the bus master (BK-M), said information indicating that the bus node (BK-1, BK-2, BK-3) is arranged at one end of the communication bus (CB).

6. A communication bus system with a communication bus (CB) having at least one data line (CAN_L, CAN_H) and an identification line (IDT), and a bus master (BK_M) and at least one further bus node (BK-1, BK-2, BK-3) according to any of the claims 1 to 5.

7. The communication bus system according to claim 6, **characterized in that** the communication bus (CB) is a controller area network bus in which an existing but unused line or an additional line is adapted as the identification line (IDT).

8. A method for successive identification of bus nodes (BK-1, BK-2, BK-3) of a communication bus system with bus nodes (BK-1, BK-2, BK-3) according to any of the claims 1 to 5, wherein a bus node (BK-M) forming one end of the communication bus (CB), said bus node being configured as the bus master (BK-M), assigns a respective unique identifier to at least one further bus node (BK-1, BK-2, BK-3), said bus node being configured as slave, by means of the following steps of:
(a) setting the further bus nodes (BK-1, BK-2, BK-3) connected to the communication bus (CB) to an initialization state;
(b) coupling the identification line (IDT) to a predetermined voltage level (Uₜ);
(c) receiving on the at least one data line (CAN_L, CAN_H) a first message from one of the further bus nodes (BK-1, BK-2, BK-3);
(d) sending a second message to the further bus node (BK-2, BK-3), said message containing the unique identifier for the further bus node (BK-2, BK-3); and
(e) terminating the identification process if the further bus node (BK-1, BK-2, BK-3) is arranged on the other end of the communication bus (CB), otherwise
(f) repeating the steps of the steps (c) to (e).

9. The method according to claim 8, **characterized in that** in step (c), the following is effected:
ascertaining whether the further bus node (BK-1, BK-2, BK-3) is arranged on the other end of the communication bus (CB) by means of an information item in the first message or by means of the voltage level on the identification line (IDT).

10. A method for receiving a unique identifier in a bus node (BK-1, BK-2, BK-3) of a communication bus system with bus nodes (BK-M, BK-1, BK-2, BK-3) according to any of the claims 1 to 5, wherein a bus node (BK-M) forming one end of the communication bus (CB), said bus node being configured as the bus master (BK-M), and at least one further bus node (BK-1, BK-2, BK-3), said bus node being configured as slave, receives the unique identifier from the bus master (BK-M) by means of the following steps of:
(i) recognizing an initialization state and in reaction thereto connecting the two-port instead of a direct connection between the IDT input (E) and the IDT output (A) of the identification line (IDT);
(ii) detecting a predetermined voltage level at the IDT input (E) and in reaction thereto sending a first message to the bus master (BK-M) on the at least one data line (CAN_L, CAN_H);
(iii) receiving a second message from the bus master (BK-M) containing the unique identifier; and
(iv) connecting the direct connection instead of the two-port between the IDT input (E) and the IDT output (A) of the identification line (IDT).

11. The method according to claim 10, **characterized in that** in step (ii) the following is effected:
inserting an information item in the first message, according to which information the further bus node (BK-1, BK-2, BK-3) has ascertained that it is arranged on the other end of the communication bus (CB).

12. The method according to claim 11, **characterized in that** the bus node (BK-1, BK-2, BK-3), when having ascertained that it is arranged on the other end of the communication bus (CB), activates a bus termination unit (200-1, 200-2, 200-3) for the at least one data line (CAN_L, CAN_H).

## Revendications

1. Noeud de bus (BK; BK-1, BK-2, BK-3) comprenant une unité de communication (TRX-1, TRX-2, TRX-3) pouvant être, pour la communication, couplée avec au moins une ligne de données (CAN_L, CAN_H) d'un bus de communication (CB), une commande de noeud de bus (BK-CTRL; BK-CTRL-1, BK-CTRL-2, BK-CTRL-3) couplée fonctionnellement à l'unité de communication (TRX-1, TRX-2, TRX-3) et une unité d'identification (100; 100-1, 100-2, 100-3) qui est couplée fonctionnellement à la commande de noeud de bus (BK-CTRL; BK-CTRL-1, BK-CTRL-2, BK-CTRL-3) et dans laquelle, au choix, au lieu d'une liaison directe entre une entrée IDT (E) et une sortie IDT (A) d'une ligne d'identification (IDT), une double porte pontable peut être interconnectée, la ligne d'identification (IDT) pouvant être couplée à un niveau de tension (U_{T}) prédéterminé,
**caractérisé en ce**
**que** la double porte est une double porte symétrique sous forme d'un circuit en T constitué de trois résistances montée en T (Rₐ, R_{b}, R_{c}) dont une première résistance (Rₐ) et une deuxième résistance (R_{b}) peuvent être montées en série avec la ligne d'identification (IDT) et une troisième résistance (R_{c}) peut être montée entre un point de liaison de la première avec la deuxième résistance et (Rₐ, R_{b}) et un potentiel de référence (GND), et
**que** l'unité d'identification (100-1, 100-2, 100-3) est paramétrée pour, dans un état d'initialisation dans lequel la double porte de la commande du noeud de bus (BK; BK-1, BK-2, BK-3) est interconnectée, signaler à l'aide d'une comparaison d'une première tension (Uₐ) à l'entrée IDT (E) avec une valeur seuil prédéterminée (Uₛ), un instant pour un échange de données, attribué au noeud de bus (BK-1, BK-2, BK-3), avec un maître de bus (BK-M) pour l'attribution d'un identifiant univoque au noeud de bus (BK-1, BK-2, BK-3) par le maître de bus (BK-M).

2. Noeud de bus (BK-1, BK-2, BK-3) selon la revendication 1, **caractérisé en ce que** le noeud de bus (BK-1, BK-2, BK-3) comporte en outre une unité de terminaison de bus (200-1, 200-2, 200-3) connectable par la commande de noeud de bus (BK-CTRL-1, BK-CTRL-2, BK-CTRL-3) pour la au moins une ligne de données (CAN_L, CAN_H).

3. Noeud de bus (BK-1, BK-2, BK-3) selon la revendication 1 ou 2, **caractérisé en ce**
**que** l'unité d'identification (100-1, 100-2, 100-3) est paramétrée pour mettre à disposition de la commande de noeud de bus un premier signal (S1) en fonction de la première tension (Uₐ) à l'entrée IDT (E), et
**que** la commande de noeud de bus (BK-CTRL-1, BK-CTRL-2, BK-CTRL-3) est paramétrée pour, à l'état d'initialisation dès que le premier signal (S1) indique que la première tension (Uₐ) est supérieure à la valeur seuil prédéterminée (Uₛ),
- au moyen de l'unité de communication (TRX-1, TRX-2, TRX-3), par l'intermédiaire de la au moins une ligne de données (CAN_L, CAN_H), envoyer un premier message au maître de bus (BK-M)
- en réponse au premier message, recevoir de la part du maître de bus (BK-M), par l'intermédiaire de la au moins une ligne de données (CAN_L, CAN_H), un deuxième message dans lequel est contenu l'identifiant univoque pour le noeud de bus (BK),
- à la suite de cela, sous l'identifiant univoque, communiquer par l'intermédiaire du bus de communication (CB).

4. Noeud de bus (BK-1, BK-2, BK-3) selon la revendication 3 et en rapport à cet égard avec la revendication 2, **caractérisé en ce**
**que** l'unité d'identification (100-1, 100-2, 100-3) est paramétrée pour mettre à disposition de la commande de noeud de bus (BK-CTRL-1, BK-CTRL-2, BK-CTRL-3) un deuxième signal (S2) en fonction d'une deuxième tension (U_{b}) à la sortie IDT (A) et un troisième signal (S3) en fonction d'une troisième tension (U_{c}) au milieu du circuit en T, et
**que** la commande de noeud de bus (BK-CTRL-1, BK-CTRL-2, BK-CTRL-3) est paramétrée pour, dès que le deuxième signal (S2) et le troisième signal (S3) indiquent que la deuxième tension (U_{b}) et la troisième tension (U_{c}) sont essentiellement égales, activer l'unité de terminaison de bus (200-1, 200-2, 200-3) pour chacune des au moins une ligne de données (CAN_L, CAN_H).

5. Noeud de bus (BK-1, BK-2, BK-3) selon la revendication 4, **caractérisé en ce**
**que** la commande de noeud de bus (BK-CTRL-1, BK-CTRL-2, BK-CTRL-3) est en outre paramétrée pour insérer dans le premier message au maître de bus (BK-M) une information qui indique que le noeud de bus (BK-1, BK-2, BK-3) est agencé une extrémité du bus de communication (CB).

6. Système de bus de communication comprenant un bus de communication (CB) qui comporte une ligne de données (CAN_L, CAN_H) et un ligne d'identification (IDT), et un maître de bus (BK-M) et au moins un autre un noeud de bus (BK-1, BK-2, BK-3) selon une des revendications de 1 à 5.

7. Système de bus de communication selon la revendication 6, **caractérisé en ce que** le bus de communication (CB) est un bus Controller Area Network dans lequel une ligne existante mais inexploitée ou une ligne supplémentaire est paramétrée en tant que la ligne d'identification (IDT).

8. Procédé d'identification successive de noeuds de bus (BK-1, BK-2, BK-3) d'un système de bus de communication comportant des noeuds de bus (BK-1, BK-2, BK-3) selon une des revendications de 1 à 5, cependant qu'un noeud de bus (BK-M) constituant une extrémité du bus de communication (CB) et étant paramétré en tant que le maître de bus (BK-M) donne à au moins un autre noeud de bus (BK-1, BK-2, BK-3) configuré en tant qu'esclave respectivement un identifiant univoque au moyen des étapes suivantes :
(a) mise de l'autre noeud de bus (BK-1, BK-2, BK-3), raccordé au bus de communication (CB), dans un état d'initialisation ;
(b) couplage de la ligne d'identification (IDT) à un niveau de tension (U_{T}) prédéterminé ;
(c) réception, sur au moins une ligne de données (CAN_L, CAN_H), d'un premier message de la part d'un des autres noeuds de bus (BK-1, BK-2, BK-3) ;
(d) envoi d'un deuxième message à l'autre noeud de bus (BK-2, BK-3), dans lequel est contenu l'identifiant univoque pour l'autre noeud de bus (BK-2, BK-3),
(e) achèvement du procédé d'identification si l'autre noeud de bus (BK-1, BK-2, BK-3) est agencé à l'autre extrémité du bus de communication (CB), sans quoi
(f) réitération des étapes de (c) à (e).

9. Procédé selon la revendication 8, **caractérisé en ce que**, à l'étape (c), ce qui suit est exécuté :
détermination révélant si l'autre noeud de bus (BK-1, BK-2, BK-3) est agencé à l'autre extrémité du bus de communication (CB), à l'aide d'une information dans le premier message ou à l'aide du niveau de tension sur la ligne d'identification (IDT).

10. Procédé de réception d'un identifiant univoque dans un noeud de bus (BK-1, BK-2, BK-3) d'un système de bus de communication comprenant des noeuds de bus (BK-M, BK-1, BK-2, BK-3) selon une des revendications de 1 à 5, cependant qu'un noeud de bus (BK-M) constituant une extrémité du bus de communication (CB) et étant paramétré en tant que le maître de bus (BK-M) et au moins un autre noeud de bus (BK-1, BK-2, BK-3) configuré en tant qu'esclave reçoit l'identifiant univoque de la part du maître de bus (BK-M) au moyen des étapes suivantes :
(i) reconnaissance d'un état d'initialisation et, en réaction à cela, connexion de la double porte au lieu d'une liaison directe entre l'entrée IDT (E) et la sortie IDT (A) de la ligne d'identification (IDT) ;
(ii) saisie d'un niveau de tension (U_{T}) prédéterminé à l'entrée IDT (E) et, en réaction à cela, envoi, sur la au moins une ligne de données (CAN_L, CAN_H), d'un premier message au maître de bus (BK-M) ;
(iii) réception d'un deuxième message du maître de bus (BK_M), contenant l'identifiant univoque ; et
(iv) connexion de la liaison directe au lieu de la double porte entre l'entrée IDT (E) et la sortie IDT (A) de la ligne d'identification (IDT) ;

11. Procédé selon la revendication 10, **caractérisé en ce que**, à l'étape (ii), ce qui suit est exécuté :
insertion d'une information dans le premier message selon lequel l'autre noeud de bus (BK-1, BK-2, BK-3) a déterminé qu'il est agencé à l'autre extrémité du bus de communication (CB).

12. Procédé selon la revendication 11, **caractérisé en ce que** le noeud de bus (BK-1, BK-2, BK-3), quand il a déterminé qu'il est agencé à l'autre extrémité du bus de communication (CB), active une unité de terminaison de bus (200-1, 200-2, 200-3) pour la moins une ligne de données (CAN_L, CAN_H).
